# EUROPEAN PATENT APPLICATION

(11) **EP 3 910 567 A1**
(43) Date of publication of application: **17.11.2021**
(21) Application number: 20382403.2
(22) Date of filing: 13.05.2020
(51) Int. Cl.: G06Q 10/04, G06N 20/20, G06N 3/04, G06N 5/00

(54) **AIRPORT CAPACITY PREDICTION SYSTEM**

(71) Applicant: The Boeing Company, Chicago, IL 60606-2016 (US)
(72) Inventor: AYHAN, Samet, CHANTILLY, VA Virginia 20151-3848 (US); ROMANI DE OLIVEIRA, Italo, 12246-870 JD SÃO JOSÉ DOS CAMPOS, SP (BR); CARVALHO LEITE, Alexandre, 28030-131 CAMPOS DOS GOYTACAZES, RJ (BR); COSTAS ÁLVAREZ, Pablo, 28042 MADRID (ES); BYHAM WILSON, Ian Andrew, CHANTILLY, VA Virginia 20151-4251 (US); BIGLIN, Michael, CHANTILLY, VA Virginia 20151-3848 (US); PINTO NETO, Euclides Carlos, 12246-870 JD SÃO JOSÉ DOS CAMPOS, SP (BR)
(74) Representative: ZBM Patents - Zea, Barlocci & Markvardsen

(57) **Abstract**

Examples provide a method and apparatus for predicting airport utilization. A plurality of data sources provides raw flight data and weather data which is stored in a key value data store. The incoming raw data is cleaned, correlated and indexed. The processed data is stored in an interim data store. A plurality of competing predictive models use the processed data and historical data to generate predicted arrivals and departures for a selected runway during a selected time-period. The predicted data is compared to actual arrival and departures for the selected runway. The ML model generating predicted results most closely matching the actual arrival and departure data is selected. The selected ML model generates predicted future arrivals and future departures data for the runway based on real-time flight data and weather data for output via a user interface device.

## Description

### BACKGROUND

Airport capacity refers to the number of aircraft which can be accommodated on each runway at a given airport at a given time. Capacity can vary as aircraft arrive and depart at multiple runways. It is desirable to schedule aircraft flight times such that aircraft can smoothly take off, land, park and taxi along runways safely without unnecessary delays or wait times. It is frequently difficult to accurately and efficiently schedule aircraft arrivals and departures where weather changes or a delayed arrival or take-off by a single aircraft at a single runway can set off a chain reaction leading to additional delays in arrivals and departures for other aircraft at one or more other runways. Therefore, it is desirable to accurately predict when aircraft are likely to arrive and depart for flight scheduling, planning, flight control, safety, and minimizing delays. However, current methods for predicting aircraft arrival and departure times rely on limited data and/or algorithms, which results in predictions that can be inaccurate, unreliable or otherwise sub-optimal resulting in increased costs.

### SUMMARY

The disclosed examples are described in detail below with reference to the accompanying drawing figures listed below. The following summary is provided to illustrate implementations disclosed herein. It is not meant, however, to limit all examples to any particular configuration or sequence of operations.

There is described herein a system and method for predicting airport utilization using a plurality of competing machine learning (ML) models. An example includes a plurality of data sources providing a continuous stream of raw data associated with at least one of a set of one or more aircraft and a selected airport. The selected airport includes a set of one or more runways. The plurality of competing ML models generates a plurality of competing sets of prediction results based on the flight data and the weather data. A set of prediction results includes predicted arrivals and predicted departures for a selected runway during a selected time-period generated by a candidate ML model in the plurality of competing ML models. The competing sets of prediction results are compared with actual arrival and departure data for the selected runway during the selected time-period. A candidate ML model from the plurality of competing ML models generating highest accuracy predictions is selected based on the comparisons. The selected ML model generates predicted future arrivals and future departures data for the set of runways based on real-time flight data and real-time weather data received from the plurality of data sources. The output from the selected ML model is presented to a user via a user interface device.

The features, functions, and advantages that have been discussed are achieved independently in various implementations or are to be combined in yet other implementations, further details of which are seen with reference to the following description and drawings.

### BRIEF DESCRIPTION OF THE DRAWINGS

FIG. 1 is an exemplary block diagram illustrating a system for airport capacity prediction in accordance with an embodiment.
FIG. 2 is an exemplary block diagram illustrating a set of runways associated with an airport for arrival and departure prediction in accordance with an embodiment.
FIG. 3 is an exemplary block diagram illustrating a system including an airport capacity prediction component for predicting airport utilization in accordance with an embodiment.
FIG. 4 is an exemplary block diagram illustrating an airport capacity prediction component in accordance with an embodiment.
FIG. 5 is an exemplary block diagram illustrating a model manager component for selecting a machine learning (ML) model for generating airport capacity predictions in accordance with an embodiment.
FIG. 6 is an exemplary block diagram illustrating a data manager component for processing raw flight and weather data in accordance with an embodiment.
FIG. 7 is an exemplary block diagram illustrating the system including a plurality of predictive ML models for generating arrival and departure predictions in accordance with an embodiment.
FIG. 8 is an exemplary block diagram illustrating microservices deployed in a cloud for generating predictions based on continuous streaming flight and weather data in accordance with an embodiment.
FIG. 9 is an exemplary block diagram illustrating a summary of microservices for generating capacity predictions in accordance with an embodiment.
FIG. 10 is an exemplary block diagram illustrating sector counts associated with a sector count prediction service in accordance with an embodiment.
FIG. 11 is an exemplary block diagram illustrating a screenshot 1100 outputting per-runway predicted arrivals and departures generated by a selected ML model in accordance with an embodiment.
FIG. 12 is a flow chart 1200 illustrating an implementation of an airport capacity prediction component for selecting a best ML model for predicting future aircraft arrivals and departures at a selected runway in accordance with an embodiment.
FIG. 13 is a flow chart 1300 illustrating an implementation of an airport capacity prediction component for identifying an ML model from a plurality of competitive predictive models in accordance with an embodiment.
FIG. 14 is a flow chart 1400 illustrating an implementation of an airport capacity prediction component for processing raw flight and weather data for query processing in accordance with an embodiment.
FIG. 15 is a flow chart 1500 illustrating an implementation of an airport capacity prediction component for outputting predictions from a highest ranked ML model in accordance with an embodiment.

Corresponding reference characters indicate corresponding parts throughout the drawings.

### DETAILED DESCRIPTION

The various implementations will be described in detail with reference to the accompanying drawings. Wherever possible, the same reference numbers will be used throughout the drawings to refer to the same or like parts. References made throughout this disclosure relating to specific implementations and implementations are provided solely for illustrative purposes but, unless indicated to the contrary, are not meant to limit all implementations.

The foregoing summary, as well as the following detailed description of certain implementations will be better understood when read in conjunction with the appended drawings. As used herein, an element or step recited in the singular and preceded by the word "a" or "an" should be understood as not necessarily excluding the plural of the elements or steps. Further, references to "one implementation" are not intended to be interpreted as excluding the existence of additional implementations that also incorporate the recited features. Moreover, unless explicitly stated to the contrary, implementations "comprising" or "having" an element or a plurality of elements having a particular property could include additional elements not having that property.

Some current solutions utilize a model-based approach, in which the future values of airport capacities are formulated by humans using limited sets of historical data and/or algorithms. This deterministic approach not as effective as desired in the ability to account for uncertainties in environment and air traffic while providing less accurate results with relatively slow prediction generation making these methods unreliable and sub-optimal. Moreover, performance analysis estimates in some examples indicate the cost of delayed flights has increased due to inefficiency in the National Airspace System (NAS) caused by inability to accurately predict future states of airspace and airports.

Aspects of the disclosure provide a capacity prediction system which builds and trains a plurality of machine learning (ML) models to generate per-runway aircraft arrival and departure predictions using training data and real-time feedback. The aircraft arrival and departure predictions for a given runway which are generated by each of the ML models are compared with actual arrival and departure data for the same runway. The airport capacity prediction service provides an efficient and accurate ML system that accurately predicts airport capacities to reduce delays and costs.

In some examples, the ML model generating the predictions which most closely match the actual arrival and departure data is selected from the plurality of competing ML models. The output from the selected ML model is output to the user. In this manner, the system constantly trains, updates and improves the ML models in real-time. This ensure that the most accurate predictions possible are provided to the user.

In other examples, the system selects the candidate ML model from the plurality of ML models that produces the most accurate predictions. The selected ML model is used to generate predictions for future aircraft arrivals and departures. This reduces error rate in arrival and departure predictions while also improving the accuracy and reliability of the generated predictions.

Given a particular airport and time in the future, the system in still other examples, accurately predicts how many aircraft will arrive and depart at each runway of that particular airport. This service is extremely valuable to aviation authorities and airlines, as the generated predictions can be used to more accurately plan and re-plan flight routes in the airspace and operations at airports, based on predicted departure and arrival data at one or more runways. The system can serve aviation authorities and airlines worldwide and enable an increased airport an airspace capacity and improved airport and airspace efficiency, thereby reducing workloads for air traffic controllers and airline ground resources.

In other examples, the system is deployed as a set of microservices on a cloud server which can be accessed by users worldwide. Users, including the aviation authorities and airlines, can invoke this capacity prediction system to determine or otherwise predict future values of landings and takeoffs for each runway at a particular airport. This enables the aviation authorities to optimally plan the airspace and airports for more efficiency and increased capacity. This can also enable the airlines to optimally plan their flights, arrivals, and departures and accordingly deploy their ground resources, reducing costs.

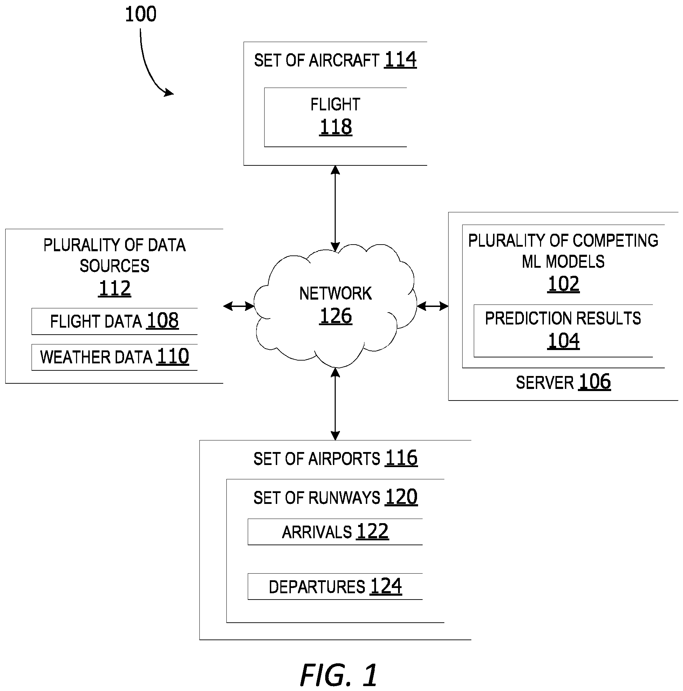

Referring more particularly to the drawings, FIG. 1 provides an exemplary block diagram illustrating a system 100 for utilizing a plurality of ML models to generate more accurate ML prediction results 104. In some examples, the airport capacity prediction system predicts the counts for arriving and departing aircraft in the set of aircraft 114 to each runway at a particular airport in the set of airports 116. The phrase "arriving and departing aircraft" refers to arriving and departing flights. In other words, the system is not generating predictions associated with specific vehicles. Instead, it is making predictions associated with a flight.

The system 100 includes a plurality of competing ML models 102 hosted on a server 106 for generating per-runway predicted arrivals and per-runway predicted departures based on flight data 108, weather data 110 and/or any other relevant data associated with aircraft arrivals and departures received from a plurality of data sources 112.

A candidate ML model in the plurality of competing ML models 102 is a predictive, machine learning model utilizing artificial intelligence and pattern recognition to analyze flight data associated with a flight 118. Flight data 108 is data describing one or more aspects of a flight, such as the flight 118. The flight 118 is a flight associated with a set of one or more aircraft 114 and/or a set of one or more airports 116. The flight data 108 can include data describing, for example, but without limitation, an aircraft location during flight, speed, course corrections, or any other type of flight-related data.

An airport in the set of airports 116 includes a private airport, a commercial airport, an airfield, an aircraft carrier, or any other location including a set of runways 120.

Each airport in the set of airports 116 includes a set of one or more runways 120. A runway in the set of runways 120 is a road, strip, smoothed area of land, aisle, platform, or any other type of runway for aircraft to park, taxi, take-off and/or land. A runway in the set of runways can include a runway at an airport, airstrip, field, aircraft carrier, helipad, or any other location where aircraft take-off or land.

An aircraft in the set of aircraft 114 can include any type of manned or unmanned vehicle capable of flight. Aircraft may be implemented as an aircraft such as, but not limited to, an airplane, a helicopter, a drone, a cargo plane, a biplane, a commercial airliner, or any other type of aircraft.

A ML model in the plurality of competing ML models 102 in some examples generates predictions regarding aircraft arrivals 122 and/or aircraft departures 124 by one or more aircraft at each runway in the set of runways taking place during a selected time-period based on historical data, including historical arrivals and departures, as well as historical weather patterns influencing those historical arrivals and departures. The candidate ML models in the plurality of competing ML models 102 utilizes pattern recognition, artificial intelligence and other ML algorithms to generate predictions regarding when a selected aircraft would land or take-off based on flight data associated with a plurality of other aircraft both in the air and on the ground, as well as weather data describing weather conditions at the set of airports and weather conditions within airspace occupied by aircraft in the air and on the ground.

The flight data 108 and weather data 110 provided by the plurality of data sources 112 includes both real-time (current) data associated with current weather conditions, as well as historical data.

Historical data includes data associated with historical (e.g., previous) aircraft arrivals and historical aircraft departures at the set of runways 120 and/or the set of airports 116 occurring in the past, as well as data describing weather conditions when those historical arrivals and departures took place at the set of airports 116.

The historical data in some examples includes actual arrivals and departures at each runway. The historical data in other examples includes other relevant data, such as, but not limited to, historical weather data, flight schedules, etc. The plurality of competing ML models 102 obtains the historical data from a plurality of data sources 112 via a network 126.

The plurality of data sources 112 in some examples includes one or more sources of weather data 110 and/or flight data 108. The plurality of data sources 112 in some examples includes any type of data source, such as, but not limited to, a data streaming service, a data store, a cloud service, a file system, database, or any other source of data. In this non-limiting example, the plurality of data sources 112 includes a traffic flow management (TFM) data feed from the federal aviation administration (FAA) providing streaming flight data 108 associated with the set of aircraft 114 and/or weather data feed from the national oceanic and atmospheric administration (NOAA) providing weather data 110 for a given sector or location, such as, but not limited to, wind speed, wind direction, humidity, air pressure, temperature, precipitation, etc.

The network 126 in some examples is implemented by one or more physical network components, such as, but without limitation, routers, switches, network interface cards (NICs), and other network devices. The network 126 is any type of network for enabling communications with remote computing devices, such as, but not limited to, a local area network (LAN), a subnet, a wide area network (WAN), a wireless (Wi-Fi) network, or any other type of network. In this example, the network 126 is a WAN, such as the Internet. However, in other examples, the network 126 is a local or private LAN.

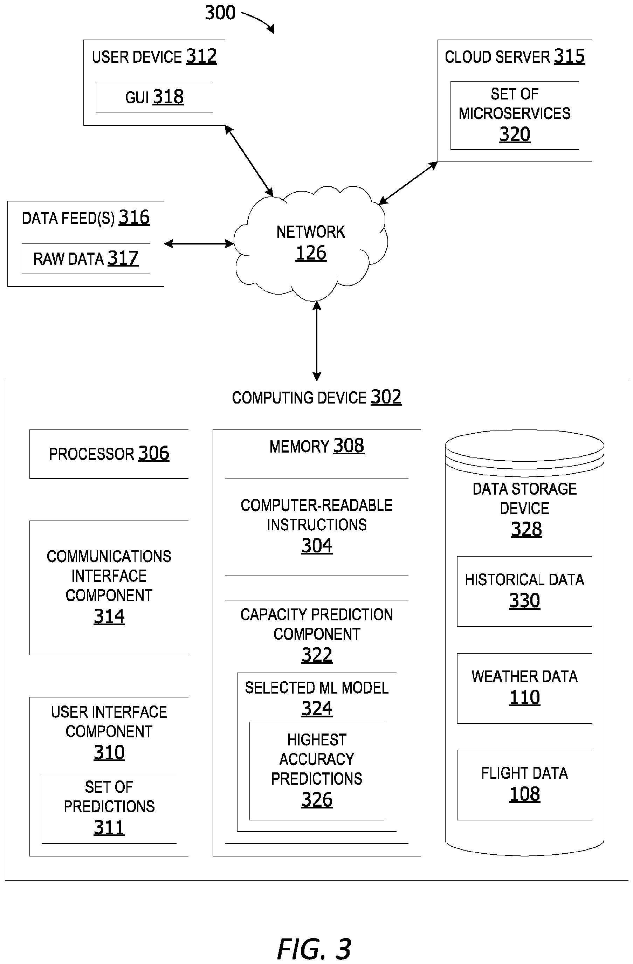

The server 106 in some examples represents any device executing computer-executable instructions (e.g., as application programs, operating system functionality, or both) to implement the operations and functionality associated with the server 106. The server 106 can be implemented as a mobile computing device or a less-portable computing device. A mobile computing device includes, for example but without limitation, a mobile telephone, laptop, tablet, computing pad, netbook, gaming device, and/or portable media player. A less portable computing device can also include servers, such as, but not limited to, a desktop personal computers, kiosks, or tabletop devices. In still other examples, the server 106 may be implemented as a cloud server, such as the cloud server shown below in FIG. 3.

Thus, in some examples, the system 100 competes several ML models and uses the feedback from incoming data to train a plurality of models in real-time. The plurality of models is continuously learning in real time. The best performing model gets rewarded, by being selected for generating predictions provided to users for utilization. The system solves the problem of accurately predicting arrival and departure counts for each runway at a particular airport in the future. With this capability, aviation authorities and airlines can more accurately perform scheduling and resource management, resulting in improvement in the four Air Traffic Management key performance areas; safety, capacity, efficiency, and environmental impact. An accurate prediction of airport capacity is crucial for better decision making for managing airspace and airports, allowing a higher level of automation and thereby reducing the air traffic controllers' and ground resources' workload.

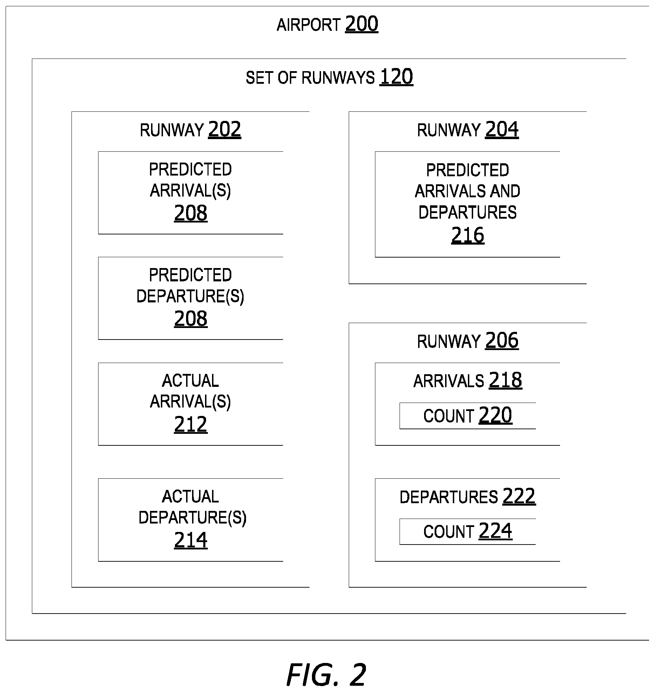

FIG. 2 is an exemplary block diagram illustrating a set of runways 120 associated with an airport 200 for arrival and departure prediction. The airport 200 is an airport including a set of runways 120, such as, but not limited to, an airport in the set of airports 116 in FIG. 1.

In some examples, the set of runways at a given airport includes one or more runways, such as, but not limited to, runway 202, runway 204, and runway 206. In this non-limiting example, the set of runways 120 includes three runways. However, the examples are not limited to sets of three runways. In other examples, the set of runways 120 can include a single runway, two runways, as well as four or more runways.

The capacity prediction system in some examples generates per-runway predicted arrival(s) 208 and predicted departure(s) 210 for one or more aircraft, such as, but not limited to, the set of aircraft 114 in FIG. 1. The capacity prediction system compares the predicted arrival(s) 208 generated by each of the ML models in the plurality of competing ML models with actual arrival(s) 212 for the selected runway 202 to identify the best ML model. In other examples, the capacity prediction system compares predicted departure(s) 210 generated by each of the candidate ML models in the plurality of competing ML models with actual departure(s) 214 for the runway 202. The model which generates predictions which are closest to the actual arrivals and actual departures of aircraft at the runway 202 is the most accurate ML model.

In other examples, the capacity prediction system generates per-runway predictions. In this example, a first set of predicted arrivals and departures 216 is generated for the first runway 204, a second (different) set of predicted arrivals and departures are generated for the second runway 202, and a third set of predicted arrivals and departures are generated by each model for the third runway 206.

The selected ML model in other examples generates a set of predicted future arrivals and departures for each runway based on real-time flight data and weather data. The predicted future arrivals and departures can include a count 220 for arrivals 218 and/or a count 224 for aircraft departures 222. The predicted arrivals and departures generated by the selected ML model is output to a user interface display.

Turning now to FIG. 3 is an exemplary block diagram illustrating a system 300 including an airport capacity prediction component for predicting airport utilization is shown. In the example of FIG. 3, the computing device 302 represents any device executing computer-executable instructions 304 (e.g., as application programs, operating system functionality, or both) to implement the operations and functionality associated with the computing device 302, such as, but not limited to, the server 106 in FIG. 1.

The computing device 302 in some examples includes a mobile computing device or any other portable device. A mobile computing device includes, for example but without limitation, a mobile telephone, laptop, tablet, computing pad, netbook, gaming device, and/or portable media player. The computing device 302 can also include less-portable devices such as servers, desktop personal computers, kiosks, or tabletop devices. Additionally, the computing device 302 can represent a group of processing units or other computing devices.

In some examples, the computing device 302 has at least one processor 306 and a memory 308. The computing device 302 in other examples includes a user interface component 310 for outputting airport capacity predictions to a user.

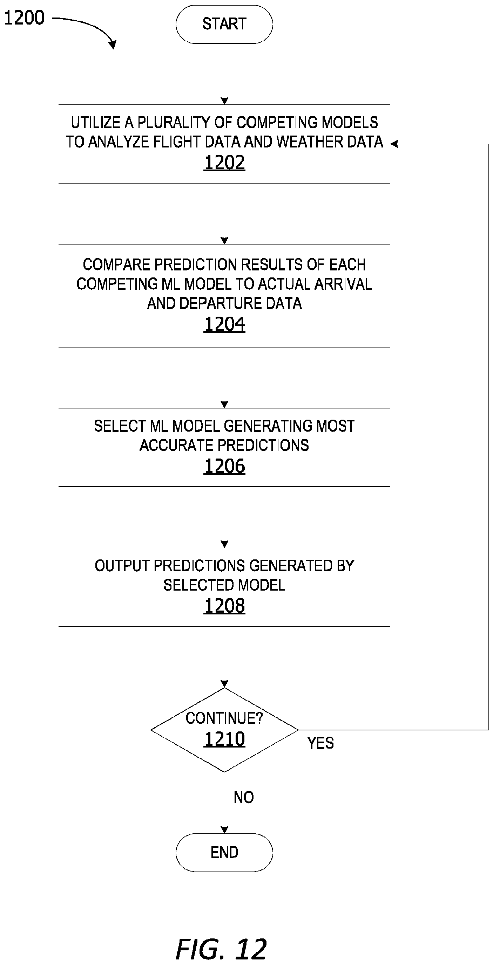

The processor 306 includes any quantity of processing units and is programmed to execute the computer-executable instructions 304. The computer-executable instructions 304 is performed by the processor 306, performed by multiple processors within the computing device 302 or performed by a processor external to the computing device 302. In some examples, the processor 306 is programmed to execute instructions such as those illustrated in the figures (e.g., FIG. 12, FIG. 13, FIG. 14, and FIG. 15).

The computing device 302 further has one or more computer-readable media such as the memory 308. The memory 308 includes any quantity of media associated with or accessible by the computing device 302. The memory 308 in these examples is internal to the computing device 302 (as shown in FIG. 3). In other examples, the memory 308 is external to the computing device (not shown) or both (not shown). The memory 308 can include read-only memory.

The memory 308 stores data, such as one or more applications. The applications, when executed by the processor 306, operate to perform functionality on the computing device 302. The applications can communicate with counterpart applications or services such as web services accessible via a network 126. In an example, the applications represent downloaded client-side applications that correspond to server-side services executing in a cloud.

In other examples, the user interface component 310 includes a graphics card for displaying data to the user and receiving data from the user. The user interface component 310 can also include computer-executable instructions (e.g., a driver) for operating the graphics card. Further, the user interface component 310 can include a display (e.g., a touch screen display or natural user interface) and/or computer-executable instructions (e.g., a driver) for operating the display. The user interface component 310 can also include one or more of the following to provide data to the user, such as a set of predictions 311, or receive data from the user: speakers, a sound card, a camera, a microphone, a vibration motor, one or more accelerometers, a BLUETOOTH® brand communication module, global positioning system (GPS) hardware, and a photoreceptive light sensor. In a non-limiting example, the user inputs commands or manipulates data by moving the computing device 302 in one or more ways.

The set of predictions 311 in this example is a set of per-runway aircraft arrival and departure predictions generated by a selected ML model selected from a plurality of competing ML models. The set of predictions 311 includes one or more predictions, such as, but not limited to, the predicted arrival(s) 208, the predicted departures(s) 210 and/or the predicted arrivals and departures 216 in FIG. 2. The set of predictions 311 are output to one or more users via the user interface component 310 in some examples.

In some examples, the system 300 optionally includes a communications interface component 314. The communications interface component 314 includes a network interface card and/or computer-executable instructions (e.g., a driver) for operating the network interface card. Communication between the computing device 302 and other devices, such as but not limited to a user device 312, a cloud server 315 and/or data feed(s) 316, can occur using any protocol or mechanism over any wired or wireless connection. In some examples, the communications interface component 314 is operable with short range communication technologies such as by using near-field communication (NFC) tags.

The user device 312 represent any device executing computer-executable instructions. The user device 312 can be implemented as a mobile computing device, such as, but not limited to, a wearable computing device, a mobile telephone, laptop, tablet, computing pad, netbook, gaming device, and/or any other portable device. The user device 312 includes at least one processor and a memory. The user device 312 can also include a user interface component for displaying data to the user, such as, but not limited to, the set of predictions 311. The user interface in some examples includes a graphical user interface (GUI) 318 device. In some examples, the best achieving candidate ML model prediction results populates the GUI 318 of the client application.

The cloud server 315 is a logical server providing services to the computing device 302 or other clients, such as, but not limited to, the user device 312. The cloud server 315 is hosted and/or delivered via the network 126. In some non-limiting examples, the cloud server 315 is associated with one or more physical servers in one or more data centers. In other examples, the cloud server 315 is associated with a distributed network of servers.

In some examples, a set of microservices 320 are deployed on the cloud server 315. The set of microservices 320 are configured to build, train and test the plurality of competing ML models and/or select a best (most accurate) ML model for generating arrival and departure predictions. The set of microservices 320 in other examples makes use of historical aircraft landings and takeoffs, along with various other prediction services, to build the best fitting prediction model. Hence, the selected ML model in one example is formed by a number of microservices, all deployed in the cloud.

The data feed(s) include one or more sources of data, such as, but not limited to, the plurality of data sources 112 in FIG. 1. The data feed(s) 316 in some non-limiting examples provide real-time, high velocity streaming data to the set of microservices 320 and/or the airport capacity prediction component 322. In some examples, the data provided by the data feed(s) 316 includes raw data 317 which is processed to remove noise and further refine the data for utilization by the plurality of ML models, including the selected ML model 324. As used herein, noise refers to extraneous data which is unnecessary for generating airport capacity predictions or data which could result in less accurate predictions. The selected ML model in this example is the model generating the highest accuracy predictions 326 when compared with the predictions generated by the other competing ML models and the actual arrivals and departure counts for each runway.

The system 300 can optionally include a data storage device 328 for storing data, such as, but not limited to historical data 330, weather data 110 and/or flight data 108. The historical data 330 includes data associated with historical (previous) aircraft arrivals and historical aircraft departures at one or more runways and/or airports. The weather data 110 and/or the flight data 108 is data received from sources, such as, but not limited to, the data feed(s) 316.

The data storage device 328 can include one or more different types of data storage devices, such as, for example, one or more rotating disks drives, one or more solid state drives (SSDs), and/or any other type of data storage device. The data storage device 328 in some non-limiting examples includes a redundant array of independent disks (RAID) array. In other examples, the data storage device 328 includes a database.

The data storage device 328 in this example is included within the computing device 302, attached to the computing device, plugged into the computing device or otherwise associated with the computing device 302. In other examples, the data storage device 328 includes a remote data storage accessed by the computing device via the network 126, such as a remote data storage device, a data storage in a remote data center, or a cloud storage.

In some examples, the capacity prediction component 322 includes a set of microservices 320 for building, training and testing the plurality of competing ML models. In this example, the capacity prediction component 322 including the set of microservices 320 is implemented on the computing device 302. In other examples, the capacity prediction component 322 including a set of microservices 320 is implemented on the cloud server 315. Thus, in some examples the system is formed by the set of microservices, all deployed in the cloud making it distributed, scalable and highly available. The system can be invoked on any device with internet connection, including desktop and mobile devices, such as the computing device 302 or the user device 312.

The capacity prediction component 322 utilizes a plurality of competing ML models configured to analyze flight data and weather data with actual arrival and departure data associated with a set of runways to generate competing sets of prediction results. Each set of prediction results in the competing sets of prediction results generated by each candidate ML model in the plurality of competing ML models includes a set of predicted arrivals and a set of predicted departures for a selected runway in the set of runways during a selected time-period. The prediction results are predictions generated using historical data, such as flight data and weather data associated with aircraft and airports during past time-periods when actual per-runway aircraft arrivals and departures are already known.

In other examples, the capacity prediction component 322 compares the competing sets of prediction results generated by each candidate ML model in the plurality of competing ML models with actual arrival and departure data for the selected runway during the selected time-period. The comparison involves comparing the candidate ML model predictions generated based on the historical data with the actual arrival and departure data to identify the model that generated the most accurate predictions.

In some examples, the ML models are ranked based on the accuracy of their predictions when compared with the actual per-runway arrivals and departure counts. The highest ranked ML model is the model which generated the most accurate predictions. Accurate predictions refer to predictions which include aircraft arrival counts, departure counts, landing time, departure time, and other arrival and departure predictions data which most closely matches or corresponds to the actual arrival and departure counts recorded in the historical data 330.

In some examples, the capacity prediction component 322 selects a candidate ML model from the plurality of competing ML models generating the highest accuracy (most accurate) predictions based on the comparisons of predicted arrival and departures with actual arrival and departures data.

The selected ML model 324 is provided with real-time flight data 108 and weather data 110 for flights and runways which is current. The selected ML model 324 utilizes the real-time data to generate new predictions for future arrivals and departures at one or more runway(s) which have not yet taken place based on current conditions. The predictions are generated for a pre-configured time-period. In some examples, the predictions cover arrivals and departures for a future twenty-four-hour time-period. In other examples, the predictions are generated for a forty-eight-hour time-period.

The output generated by the selected ML model based on real-time flight data and weather data received from a plurality of data sources. The output is presented to a user via a user interface, such as, but not limited to, the user interface component 310 or the GUI 318 on the user device 312.

In some examples, the system uses streaming flight data provided by the FAA, and weather data provided by the NOAA. The data is large in volume, streamed at high velocity, uncorrelated and noisy. In some examples, the NOAA provides actual weather in real-time, over 100 parameters per grid point in airspace. The FAA in other examples provides flight data including aircraft tail numbers, aircraft three-dimensional location coordinates (altitude, latitude, longitude), airspeed, and other flight-related data in real-time.

The system continuously processes the incoming raw data and makes it available for the next step where an interim data store is created and adaptively maintained for efficient query processing. In the prediction step, the system learns from historical arrival and departure counts, weather parameters, and other salient features to build various machine learning models. The system also leverages existing set of predictive services by querying and reusing their result sets. Upon validation, the model with most accurate result is used for prediction.

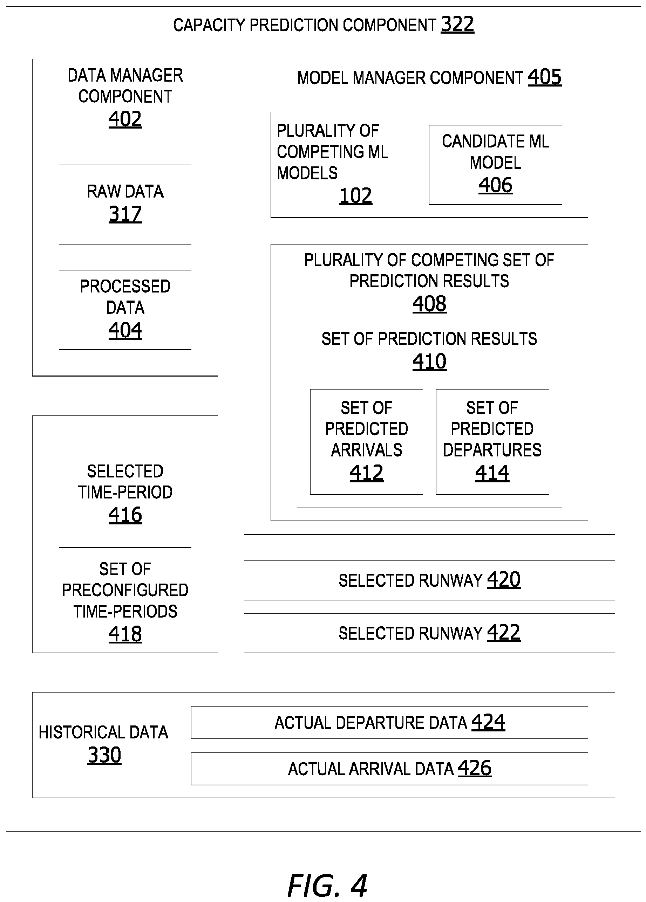

FIG. 4 is an exemplary block diagram illustrating a capacity prediction component 322. The capacity prediction component 322 uses artificial intelligence (AI)/ML to quantify the utilization of an airport on a per-runway basis.

A data manager component 402 which processes incoming raw data 317 to generate processed data 404. The processing of the raw data 317 includes filtering out extraneous data (noise), correlating data and/or indexing the data for storage in a data store. The raw data 317 is processed to place the data into a format which is ready for analysis by each candidate ML model the plurality of competing ML models 102, such as a candidate ML model 406. The candidate ML model is a predictive ML model in the plurality of competing ML model 102 which is being built, trained and/or tested to identify the most accurate ML model.

In some examples, the plurality of competing ML models 102 generates a plurality of competing sets of prediction results 410. A set of prediction results 410 generated by a ML model, such as the candidate ML model 406, generates a set of predicted arrivals 412 of aircraft at a selected runway 420 at a selected airport 422 and/or a set of predicted departures 414 of aircraft at the given runway.

The set of predicted arrivals 412 can include no arrivals predicted, a single predicted aircraft arrival and/or two or more predicted arrivals. Likewise, the set of predicted departures 414 can include a null with no predicted departures, as well as one or more predicted aircraft departures. An arrival refers to an aircraft landing at a selected runway within a selected time-period chosen from a set of one or more pre-configured time-periods. An aircraft departure refers to an aircraft predicted to take-off from a given runway within a selected time-period. In some non-limiting examples, the selected time-period is a fifteen-minute time-period.

In this example, the plurality of competing sets of prediction results 408 are generated by two or more candidate ML models based on processed data 404. The model manager component 405 compares prediction results generated by the ML models with actual departure data 424 and actual arrival data 426 for the selected runway 420 during the selected time-period 416 to determine the accuracy of the predictions. The candidate ML model generating the most accurate predictions is selected.

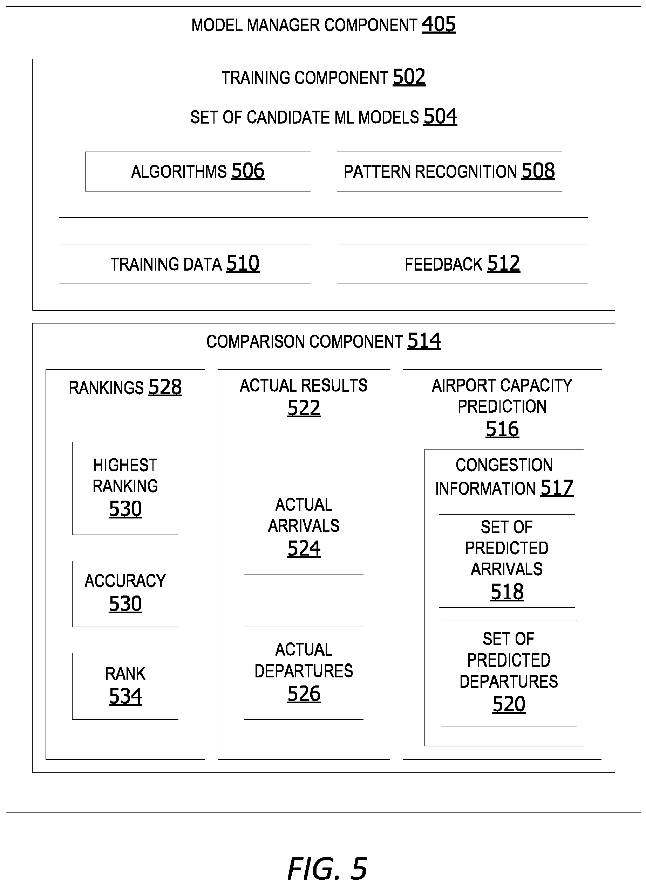

FIG. 5 is an exemplary block diagram illustrating a model manager component 405 for selecting a ML model for generating airport capacity predictions. In some examples, a training component 502 builds, trains and refines a set of candidate ML models 504 using training data 510 and real-time feedback 512. The set of candidate ML models 504 includes a set of one or more machine learning algorithms 506, including pattern recognition 508.

A comparison component 514 compares an airport capacity prediction 516 from the set of prediction results 410 with actual results 522. The actual results 522 in some examples includes congestion information 517 for a selected runway. The congestion information 517 includes actual arrivals 524 and actual departure 526 counts for the selected runway. In other examples, the congestion information 517 includes other congestion-related information, such as, but not limited to, taxing aircraft, parked aircraft, etc.

The actual results 522 include historically known airport capacity data from a previous time-period at a given airport. The airport capacity prediction 516 is a prediction generated by a given ML model in the plurality of competing ML models. The airport capacity prediction 516 includes, for example but without limitation, per-runway aircraft arrivals, per-runway aircraft departures, per-runway congestion, etc.

The comparison component 514 identifies the best performing ML model from the set of candidate ML models in some examples by generating rankings 528 for each candidate ML model in the set of candidate ML models 504 based on the results of the comparisons. The rankings 528 can include a rank 534 for each model based on a degree or percentage of accuracy of the predictions generated by each model. The highest ranking 530 model having a rank indicating the results were closest to actual arrivals and departures is selected.

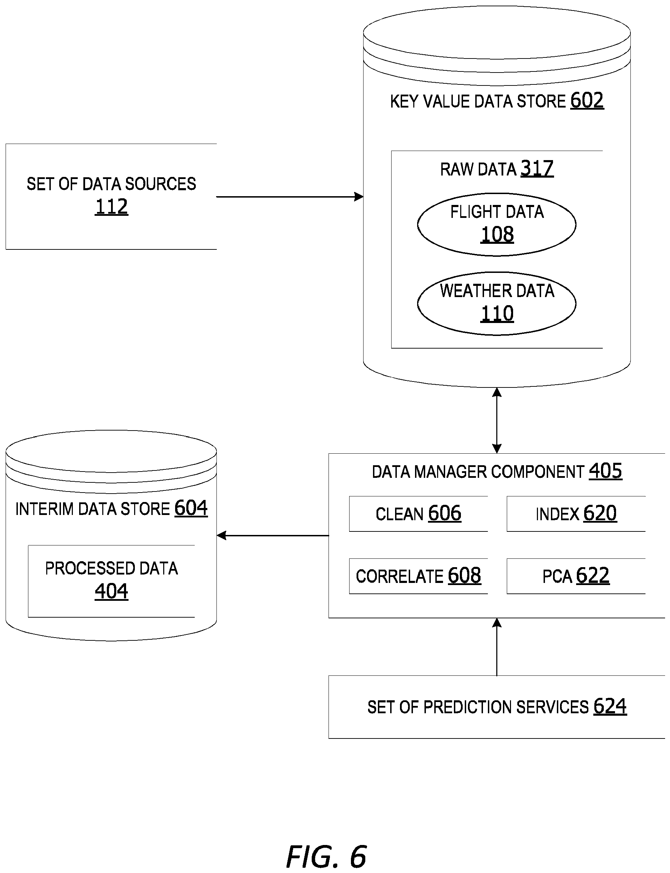

FIG. 6 is an exemplary block diagram illustrating a data manager component 402 for processing raw flight data 108 and weather data 110. In some examples, raw data 117, including real-time flight data 108 and weather data 110, obtained from the set of data sources 112 feeds is stored into a key value data store 602. The data manager component 402 processes the raw data 317 to generate processed data 404 which is stored in an interim data store 604.

In some examples, processing the raw data 117 includes processes to clean 606, correlate 618 and/or index 620 the data. The data manager component 402 in other examples also performs principal component analysis (PCA) on the flight data and weather data to further refine the data input to the plurality of competing ML models and/or the selected ML model. In some examples, the process of cleaning, indexing and correlating takes place on the wire as the system creates a replica of the processed data for storage on the interim database.

In other examples, raw, unprocessed data is stored in the key value data store. Another process grabs the incoming raw data in parallel process and pushes the data into an interim data store while cleaning, indexing and correlating the data to create a replica which is a clean indexed version of the data.

The processing can take place in sequential manner, wherein cleaning takes place prior to indexing of the data. In other examples, data is cached for faster access/processing.

A set of prediction services 624 in other examples provides additional input to the system. The set of prediction services 624 can optionally provide forecast flight delay data, taxi duration predictions, fuel usage predictions and/or parking stand predictions. This additional data is utilized by the ML models to generate test predictions used in identifying a best candidate ML model, as well as by the selected ML model to generate future predictions for presentation to a user.

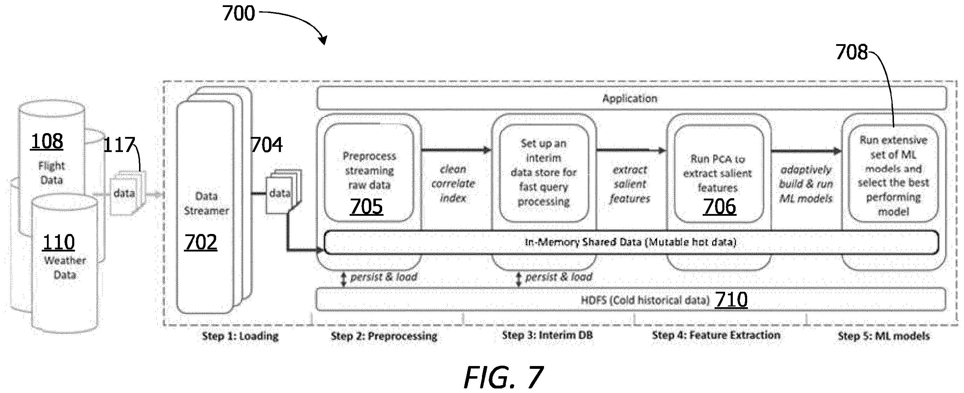

FIG. 7 is an exemplary block diagram illustrating the system 700 including a plurality of predictive ML models for generating arrival and departure predictions. In some non-limiting examples, flight data 108 and weather data 110 is received as raw data 117 from a set of data sources via a data streamer 702. The replica of the data 704 input undergoes pre-processing 705 to convert the raw data into processed data. The data manager component in other examples performs further PCA to extract salient features from historic flight data to eliminate bias, badly correlated data, and variance in the processed data. The salient features extracted from the data includes, for examples, but without limitation, data describing airport features, environmental features, spatial features and/or temporal features associated with the set of runways.

In some non-limiting examples, the system includes Hadoop distributed file system (HDFS) 710 to handle large data sets. In this example, the HDFS 710 stores cold historical data which is used to train and test the plurality of competing ML models. The cold historical data is data associated with weather and flights occurring in the past, such as one-week old data, two-week old day, month old data, etc.

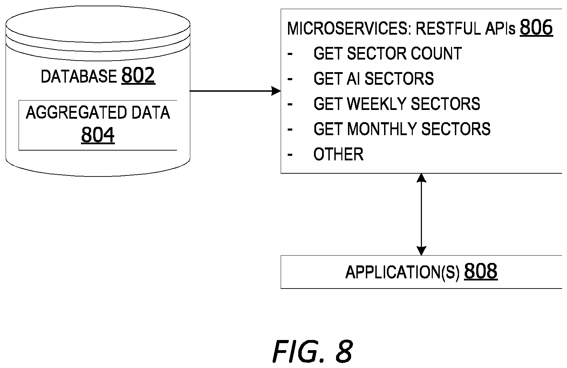

FIG. 8 is an exemplary block diagram illustrating microservices deployed in a cloud for generating predictions based on continuous streaming flight and weather data. In some examples, a database 802 stores aggregated data 804, including historical weather data and historical flight-related data. The set of microservices 806 utilize representational state transfer (REST) application programming interface (API) to retrieve and request data and other messages from the database 802 and/or other applications 808. The Restful APIs include, for example, but without limitation, "getSectorCount" requests to obtain arrival and departure counts for a given sector associated with a selected area of airspace or an airport, a "getAIISectors" to retrieve data associated with multiple sectors, "getWeeklySectors" to obtain data for one or more weeks, "getMonthlySectors" to request historical data for a selected month, etc. The GET requests are sent to the database or other applications to request data.

Other microservices which can be called by the RESTful API to obtain additional information for utilization by the capacity prediction system includes, for example, but without limitation, as follows: getOneSectorCount; getOneSectorCountWeekDays; getAIISectorCountWeekDays; getOneTaxiTime; getOneSectorCountAllWeekDays; predictSectorCountWeekDay; predictTaxiTime; predictSectorCountOneDay; predictSumSectorCountOneDay; getOneETA; predictSectorCountAllWeekDay; predictAllSectorCountOneDay; getOneRunwayConfigBucketsbuckets; getOneRunwayConfigBucketsAllWeekDays; getOneTaxiTimeRunways; getOneTaxiTimeBuckets; getOneRunwayConfig; and getOneTaxiTimeBucketsAllWeekDays.

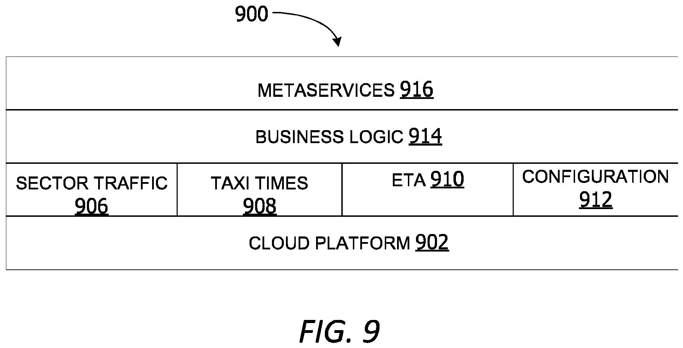

FIG. 9 is an exemplary block diagram illustrating a summary of microservices 900 for generating capacity predictions. In some examples, the system includes a cloud platform 902, such as, but not limited to, MICROSOFT AZURE cloud platform. A set of prediction services 624 includes a set of one or more predictive models for providing sector traffic density predictive service 906 for generating sector traffic density predictions, taxi time predictive service 908 for generating taxi time predictions for aircraft taxing on the runway, estimated time of arrival (ETA) prediction service 910 for generating ETA predictions and/or airport configuration predictive service 912 for generating airport configuration predictions.

In other examples, the business logic for airport capacity prediction service 914 includes the plurality of ML models for generating arrival and departure predictions. The business logic for airport capacity prediction service 914 includes the capacity prediction component and the set of microservices for training and selecting the highest accuracy ML model.

The business logic for airport capacity prediction service 914 in some examples include weather data input received in a meteorological terminal aviation routine weather report (METAR) format for predicting weather data used by aircraft pilots. The first level prediction microservices utilize input data to generate predictions, such as, but not limited to, aircraft taxi time, ETA for aircraft, total time (TT) and sector counts for aircraft. The business logic for airport capacity prediction service 914 generates airport capacity and congestion rate predictions based on the inputs and first level predictions.

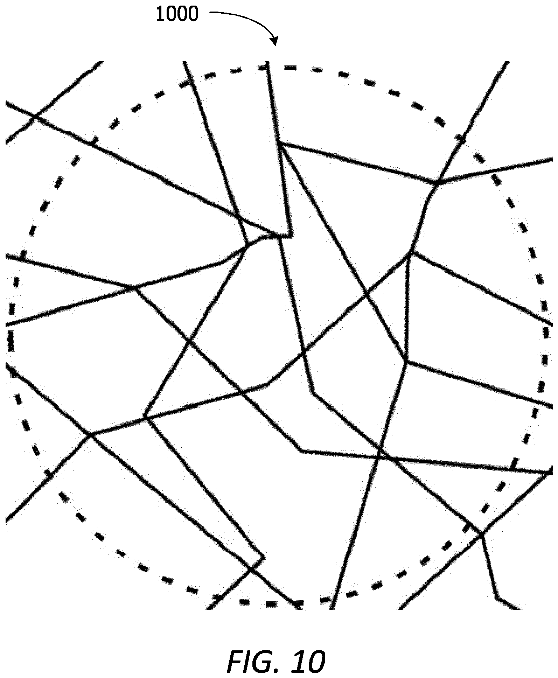

FIG. 10 is an exemplary block diagram illustrating sector counts associated with a sector count prediction service 1000. In this non-limiting examples, sectors are selected in a radius of three hundred and twenty-one kilometers.

The sector counts include two or more sectors of airspace. The flight data includes data associated with the location, speed, latitude, longitude, altitude, and other information associated with aircraft within a given sector and a selected time-period.

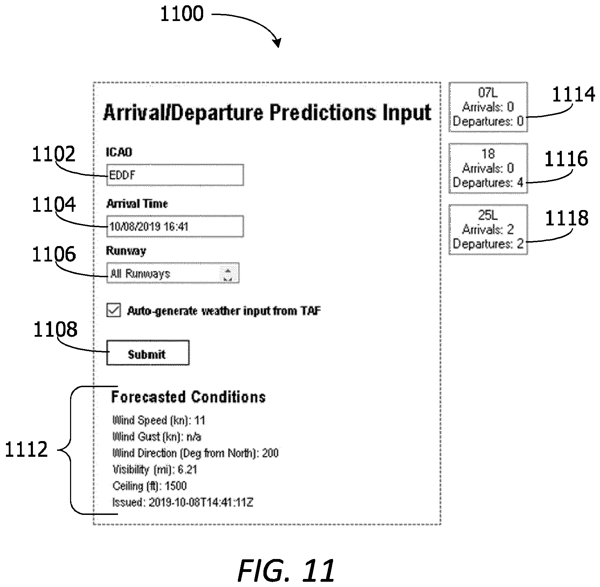

FIG. 11 is an exemplary block diagram illustrating a screenshot 1100 outputting per-runway predicted arrivals and departures generated by a selected ML model. The display in some non-limiting examples includes fields enabling a user to select arrival and departure predictions for a selected runway during a selected time-period. The screenshot 1100 is an illustration of output presented to a user via a client application on a mobile platform, in which upon entrance of input parameters (airport and time), the system presents future values of arrival and departure aircraft counts for each runway at that particular airport. The mobile platform can include a user device, such as, but not limited to, the user device 312 in FIG. 3.

In this example, the user enters an international civil aviation organization (ICAO) 1102 number to identify a selected airport, an arrival time 1104, a selected runway 1106 identifier (ID). In some examples, given an airport identified by its ICAO code and a 15-minute time bucket in the future, the capacity prediction service computes predicted departure and arrival counts and presents the results to the client.

Forecasted weather conditions 1112 are optionally also provided. When the user selects a submit 1108 control, the system displays a set of per-runway predicted aircraft arrivals, congestion, aircraft departures and/or other airport utilization predictions.

In some examples, a first set of predictions 1114 for a first runway indicates no predicted arrivals and no predicted departures. A second set of predictions 1116 for a second runway indicates no predicted arrivals during a selected time-period and four predicted departures. A third set of predictions 1118 for a third runway includes two predicted aircraft arrivals and two predicted aircraft departures during a selected time-period. However, the examples are not limited to the information shown in FIG. 11 or the arrangement of information shown.

FIG. 12 is a flow chart 1200 illustrating an implementation of an airport capacity prediction component for selecting a best ML model for predicting future aircraft arrivals and departures at a selected runway. A plurality of competing ML models is used to analyze flight data and weather data at 1202. Prediction results generated by each of the models in the plurality of ML models is compared to actual arrival and departure data at 1204. An ML model generating the most accurate predictions is selected at 1206. The predictions generated by the selected ML model is output to a user device for presentation to a user at 1208. A determination is made whether to continue at 1210. If yes, operations 1202 through 1210 are iteratively executed to continuously train and refine ML models to improve the accuracy of predictions generated by the ML models. If a determination is made not to continue at 1210, the process terminates thereafter.

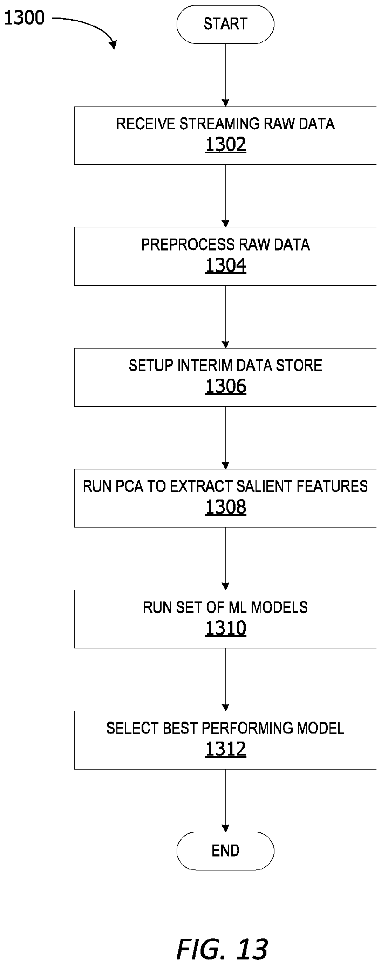

FIG. 13 is a flow chart 1300 illustrating an implementation of an airport capacity prediction component for identifying an ML model from a plurality of competitive predictive models. Streaming raw data is received at 1302. The raw data is run through pre-processing to eliminate noise at 1304. An interim datastore is setup at 1306. The interim datastore may be implemented in a data storage device, such as, but not limited to, the data storage device 328 in FIG. 3. The capacity prediction system runs PCA to extract salient features from the data at 1308. In some examples, the salient features are extracted using PCA. The set of ML models runs at 1310 to generate test predictions based on historical data. The best performing model is selected from the plurality of competing ML models at 1312. The process terminates thereafter.

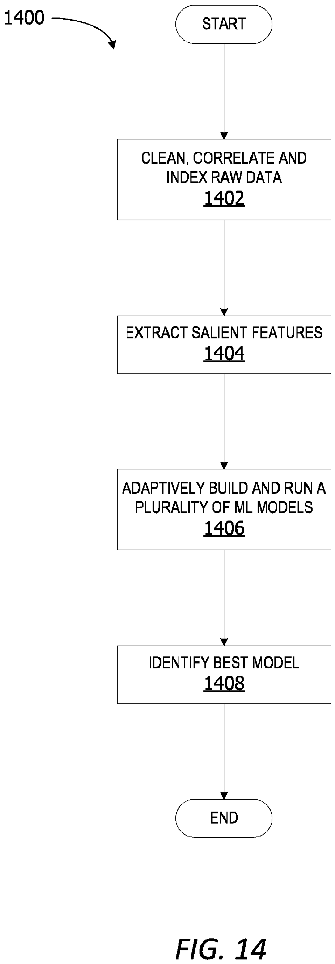

FIG. 14 is a flow chart 1400 illustrating an implementation of an airport capacity prediction component for processing raw flight and weather data for query processing. Raw data is cleaned, correlated and indexed at 1402. Salient features are extracted from the data at 1404. A plurality of competing ML models is adaptively built and run at 1406. The best performing model is identified at 1408. The process terminates thereafter.

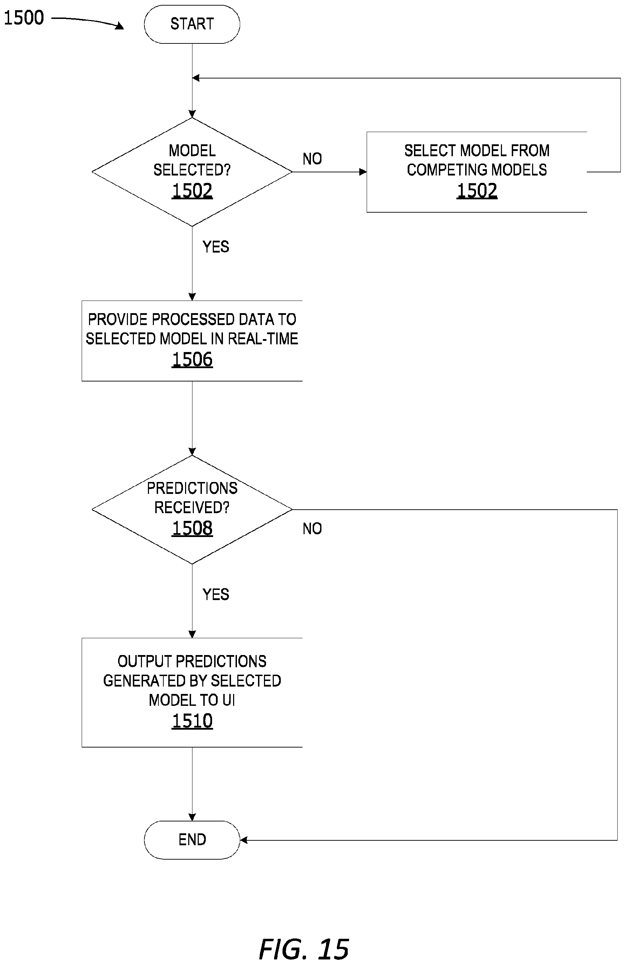

FIG. 15 is a flow chart 1500 illustrating an implementation of an airport capacity prediction component for outputting predictions from a highest ranked ML model. A determination is made whether a ML model is selected from a plurality of competing ML models at 1502. If no, a model is selected from the plurality of competing models at 1504. Processed data is provided to the selected model in real-time at 1506. A determination is made whether predictions are received from the selected model at 1508. If yes, the predictions generated by the selected model is output to a user interface at 1510. The process terminates thereafter.

Thus, in some examples, the airport capacity prediction system utilizes a stochastic approach taking all uncertainties into account and build a number of competing ML models (linear, non-linear, ensemble and Neural Nets) on massive volume of historical data to select the best performing model for prediction. The system generates more efficient and more accurate results.

In other examples, the system continuously consumes and learns from 6-million flight messages on average per-day provided by the FAA's Traffic TFM data feed. The system also consumes and utilizes massive volume of weather data provided by the NOAA. The data is cleaned, correlated, indexed and stored in a key-value data store for efficient query processing.

In other examples, the system is architected as a set of microservices, all deployed in the cloud making the system distributed, scalable, and highly available. Flight and weather big data from other sources, agencies, organizations, sensor devices and/or countries can also be plugged into the capacity prediction system to predict airport capacities across the globe enabling increased flexibility and adaptability of the system.

The system in still other examples uses a diverse set of features that goes through PCA to eliminate bias and variance in the historical raw dataset. Upon PCA, only salient features are selected and used in the competing ML models. These features include airport features (airport, runway, runway configuration, departure counts, arrival counts, etc.), environmental features (wind speed, wind direction, humidity, pressure, temperature, visibility, etc.), spatial features (airport position, runways' positions, runways lengths, etc.), temporal features (time of day, day of week, week of month, month of year, taxi time, arrival time, departure time, arrival delay, departure delay, etc.) and combination of these features. The system optionally also invokes the set of predictive services and uses their result sets as salient features in the competing ML models for predicting airport capacity. This diverse set of salient features along with underlying set of predictive services make the airport capacity prediction service highly efficient and accurate.

The system, in still other examples, utilizes a wide variety of competing ML models, in which pertinent hyperparameters are tuned specifically for airport capacity prediction problems. Hyperparameters are ML model-specific factors fine-tuned for generating airport capacity predictions having greatest accuracy or reliability. The hyperparameters are preset values for generating the airport capacity predictions using filtered weather and flight data. The fine-tuning is performed on a regular basis or periodically. The hyperparameters change or vary depending on which ML model in the plurality of competing ML models is being run. During a test turn using historical data, the predictions generated by each competing ML model using the historical is compared with actual historical airport capacity for a given historical date or time-period. The ML model generating the best prediction which most closely matches the actual airport capacity is selected. Thus, in some examples, the most accurate result-generating hyperparameter is selected for utilization in generating future airport capacity by the best performing ML model in the plurality of competing ML models. The selected ML model is fed real-time, current flight and weather data to obtain future predictions of airport capacity.

In some examples, weather data and flight data are filtered to obtain flight-related data during a relevant time-period, flight-related data for flights within a specified location or area associated with a selected airport, etc. Other relevant data which may be fed into the competing ML models includes, without limitation, predicted flight arrival times during a specified time-period and/or within a given area, predicted flight departure times during a specified time-period and/or within a given area, flight speed, predicted airport parking capacity, predicted fuel usage, actual fuel usage, aircraft trajectory, time-period of interest, fuel trip calculations, predicted parking stand availability at an airport, arrival time, departure time, taxi time, flight duration, as well as any other actual or predicted weather and/or flight-related data.

The hyperparameters in some examples are fine-tuned based on comparisons of predictions with actual, historical data during training and/or testing of the ML models. The hyperparameters are obtained by filtering weather data and/or flight data for parameters which are most accurate or relevant for calculating airport capacity predictions.

The competing ML models can include for example but without limitation, linear, non-linear, ensemble, and Neural Network Machine Learning models include. The competing ML models in some examples include, without limitation, Linear, Lasso, Elastic Net Regression, Classification and Regression Trees, Support Vector Regression, k-Nearest Neighbors, Adaptive Boosting, Gradient Boosting, Random Forest Regression, Extra Trees Regression, and Recurrent Neural Networks. Upon competition, the best performing model is selected and presented for prediction. The utilization of this wide variety of competing ML models, and their competition enables the system to reach high accuracy values.

In an example scenario, the system treats known historical data as if it is unknown. The system utilizes historical flight-related data (flight data) and weather data for the past week (7 days) and generates predictions for arrivals and departures across15 minute buckets. The last days buckets are utilized as test data and the previous days buckets are utilized for training data provided to the plurality of competing ML models. The known arrivals and departures outcome data is not provided to the ML models as a test. In other words, the ML models generate predictions based on the historical weather and flight data for a past set of days where the actual number of arrivals and departures for that set of days is already known. The generated predictions are compared with the known arrivals and departures to determine how accurate a given candidate ML model's predictions are as compared with the actual arrivals and departures.

In other examples, the system utilizes feedback to validate a prior prediction and further retrain/refine the system. The system utilizes historical data in an archive detailing how many aircraft landed and departed on a particular previous day at a runway and airport. The system creates sections/folds to divide historical data into pieces or chunks. If the data is divided into ten pieces, nine of those pieces are used as training data to prepare the ML models. In other words, the nine pieces of historical data is used to build, train and refine the ML models. The last piece is used as test data to test the ML models. The system tests the accuracy of the ML model algorithms by treating the known arrival and departures at a given airport runway in a given time-period as unknown to assess the accuracy of each candidate ML model's predictions.

In some examples, the capacity prediction system offers accurate prediction of arrival and departure counts for each runway at a particular airport in the future, which is a valuable capability for aviation authorities and airlines. With this capability, users can more accurately perform scheduling and resource management, resulting in savings in time and money. This capability can also offer improvement in the four Air Traffic Management key performance areas; safety, capacity, efficiency, and environmental impact.

The system, in other examples, uses a data-driven stochastic approach, rather than model-based deterministic approach enabling the system to take uncertainties into account when computing predicted values. Furthermore, the system continuously consumes massive volumes of flight and weather data and accumulates raw historical data in a database. Upon execution of an unsupervised learning method, such as PCA, our system selects a diverse set of salient features from massive volume of raw historical data for utilization by the wide variety of competing ML models. The system also uses wide variety of competing ML models to provide higher performance and accuracy compared to other systems. Moreover, the continuous flight and weather data consumption and storage, a more diverse set of salient features, and a wider range of ML models makes this system more efficient and more accurate.

PCA is utilized in some examples to reduce the number of features found in flight data and weather data to minimize bad data correlation and improve accuracy of predictions. PCA is used on historical data and processed data stored in the interim data store on a regular basis to identify salient features. That gives us a good understanding of what captures underlying patterns in historical data so the system can make more accurate predictions.

The following paragraphs describe further aspects of the disclosure:
1A. A system for predicting airport utilization, the system comprising:
   a computing device comprising a computer-readable medium storing instructions that are operative upon execution by a processor to:
   generate a plurality of competing sets of prediction results, by a plurality of competing machine learning (ML) models analyzing flight data and weather data associated with at least one of a set of aircraft and a selected airport, wherein a set of prediction results from the plurality of competing sets of prediction results comprises a set of predicted arrivals and a set of predicted departures for at least one runway during a selected time-period, each set of prediction results generated by each candidate ML model from the plurality of competing ML models;
   compare the competing sets of prediction results with actual arrival and departure data for the selected airport during the selected time-period;
   select a ML model from the plurality of competing ML models generating highest accuracy predictions.
2A. The system of clause 1A, wherein the instructions are further operative to:
   extract a set of salient historical data from historical flight-related data using PCA to eliminate bias and variance, wherein the set of salient historical data comprises data associated with at least one of airport features, environmental features, spatial features and temporal features associated with the runway; and
   store the set of salient historical data in an interim data store for utilization by the plurality of competing ML models.
3A. The system of any one of clauses 1A - 2A, wherein the instructions are further operative to:
   process raw data by the plurality of competing predictive models, wherein the processing of the raw data further comprises:
   cleaning the raw data to remove extraneous data;
   correlating the raw data;
   indexing the raw data; and
   storing the processed data in a key-value data store for query processing.
4A. The system of any one of clauses 1A - 3A, wherein the instructions are further operative to:
   train the plurality of competing ML models with the flight data, the weather data and real-time feedback associated with aircraft arrivals and departures, wherein one or more hyperparameters associated with at least one candidate ML model is tuned specifically for airport capacity prediction during training.
5A. The system of any one of clauses 1A - 4A wherein the instructions are further operative to:
   deploy a set of microservices on a cloud server, wherein the set of microservices build, train and test the plurality of competing ML models to generate the plurality of competing sets of prediction results using real-time feedback and training data.
6A. The system of any one of clauses 1A - 5A, further comprising:
   a plurality of data sources providing the flight data and the weather data, wherein the instructions are further operative to:
   analyze data associated with a selected runway by the selected ML model; and
   provide per-runway utilization data for the runway, wherein the per-runway utilization data comprises congestion information for the selected runway, including predicted aircraft arrival and departure counts for the selected runway at a selected airport within a selected future time-period.
7A. The system of any one of clauses 1A - 6A, wherein the instructions are further operative to:
   provide real-time flight data and real-time weather data received from a plurality of data sources to the selected ML model;
   obtain predicted airport capacity for a runway generated by the selected ML model based on real-time flight data and weather data received from the plurality of data sources; and
   output the predicted airport capacity generated by the selected ML model to at least one user interface device, wherein the predicted airport capacity comprising predicted future aircraft arrival counts and predicted future aircraft departure counts for the runway during a set of pre-configured time-periods, wherein the predicted future aircraft arrival counts.
8A. The system of clause 7A, wherein the instructions are further operative to:
   adjusting at least one candidate ML model in the plurality of competing ML models based on the real-time flight data and the real-time weather data.
9A. A method for predicting airport utilization, the method comprising:
   utilizing a plurality of competing machine learning (ML) models configured to analyze flight data and weather data with actual arrival and departure data associated with a runway to generate competing sets of prediction results, a set of prediction results from the competing sets of prediction results comprising a set of predicted arrivals and a set of predicted departures for a runway in the runway during a selected time-period generated by a candidate ML model in the plurality of competing ML models;
   comparing the competing sets of prediction results generated by the plurality of competing ML models with actual arrival and departure data for the runway during the selected time-period;
   selecting a candidate ML model from the plurality of competing ML models generating highest accuracy predictions; and
   outputting predicted future arrivals and future departures data for the runway generated by the selected ML model based on real-time flight data and weather data received from a plurality of data sources.
10A. The method of clause 9A, further comprising:
   extracting a set of salient historical data from historical flight-related data using PCA to eliminate bias and variance, wherein the set of salient historical data comprises data associated with at least one of airport features, environmental features, spatial features and temporal features associated with the runway; and
   storing the set of salient historical data in an interim data store for utilization by the plurality of competing ML models.
11A. The method of any one of clauses 9A - 10A, further comprising:
   displaying predicted future aircraft arrival counts and predicted future aircraft departure counts for the runway during a set of pre-configured time-periods to a user interface device, wherein the predicted future aircraft arrival counts and the predicted future aircraft departure counts are generated by the selected ML model.
12A. The method of any one of clauses 9A - 11A, further comprising:
   processing raw data by the plurality of competing ML models, wherein the processing of the raw data further comprises:
   cleaning the raw data to remove extraneous data;
   correlating the raw data;
   indexing the raw data; and
   storing the processed data in a key-value data store for query processing.
13A. The method of any one of clauses 9A - 12A, further comprising:
   deploying a set of microservices on a cloud server, wherein the set of microservices build, train and test the plurality of competing ML models to generate the competing sets of prediction results using real-time feedback and training data.
14A. The method of any one of clauses 9A - 13A, wherein the plurality of ML models comprises at least one of a linear ML model, a non-linear ML model, an ensemble ML model, lasso ML model, elastic net regression, classification and regression trees, support vector regression, k-nearest neighbors, adaptive boosting, gradient boosting, random forest regression, extra trees regression, and recurrent neural networks.
15A. A computer program product, comprising a computer usable medium having a computer readable program code embodied therein, the computer readable program code adapted to be executed to implement a method for predicting airport utilization runway, the method comprising:
   training a plurality of competing machine learning (ML) models configured to generate predicted arrivals and predicted departures for each runway in a runway with real-time feedback and historical data associated with actual arrivals and actual departures to generate competing sets of prediction results, a set of prediction results from the competing sets of prediction results comprising a set of predicted arrivals and a set of predicted departures for a runway in the runway during a selected time-period generated by a candidate ML model in the plurality of competing ML models;
   comparing the competing sets of prediction results with actual arrival and departure data for the runway during the selected time-period to select a ML model from the plurality of competing ML models generating highest accuracy predictions; and
   displaying predicted future arrivals and future departures data for the runway generated by the selected ML model based on real-time flight data and weather data received from a plurality of data sources to at least one user interface device.
16A. The method of clause 15A, further comprising:
   extracting a set of salient historical data from historical flight-related data using PCA to eliminate bias and variance, wherein the set of salient historical data comprises data associated with at least one of airport features, environmental features, spatial features and temporal features associated with the runway.
17A. The method of clause 16A, further comprising:
   storing the set of salient historical data in an interim data store for utilization by the plurality of ML models.
18A. The method of any one of clauses 15A - 16A, further comprising:
   processing raw data utilization by the plurality of competing ML models, wherein the processing of the raw data further comprises:
   cleaning the raw data to remove extraneous data;
   correlating the raw data; and
   indexing the raw data for storage.
19A. The method of clause 18A, further comprising:
   storing the processed data in a key-value data store for query processing.
20A. The method of any one of clauses 15A - 19A, further comprising:
   deploy a set of microservices on a cloud server, wherein the set of microservices build, train and test the plurality of competing ML models to generate the competing sets of prediction results using feedback and training data.

When introducing elements of aspects of the disclosure or the implementations thereof, the articles "a," "an," "the," and "said" are intended to mean that there are one or more of the elements. The terms "comprising," "including," and "having" are intended to be inclusive and mean that there could be additional elements other than the listed elements. The term "implementation" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system for predicting airport utilization, the system comprising:
a computing device (302) comprising a computer-readable medium (308) storing instructions (304) that are operative upon execution by a processor (306) to:
generate a plurality of competing sets of prediction results (410), by a plurality of competing machine learning (ML) models (102) analyzing flight data (108) and weather data (110) associated with at least one of a set of aircraft (114) and a selected airport (200), wherein a set of prediction results (410) from the plurality of competing sets of prediction results (408) comprises a set of predicted arrivals (412) and a set of predicted departures (414) for at least one runway (202) during a selected time-period (416), each set of prediction results (410) generated by each candidate ML model (406) from the plurality of competing ML models (102);
compare the competing sets of prediction results (408) with actual arrival and departure data (424 and 426) for the selected airport (200) during the selected time-period (416);
select a ML model (406) from the plurality of competing ML models (102) generating highest accuracy predictions (326).

2. The system of claim 1, wherein the instructions are further operative to:
extract a set of salient historical data (330) from historical flight-related data using PCA to eliminate bias and variance, wherein the set of salient historical data comprises data associated with at least one of airport features, environmental features, spatial features and temporal features associated with the runway; and
store the set of salient historical data in an interim data store for utilization by the plurality of competing ML models.

3. The system of claim 1, wherein the instructions are further operative to:
process raw data by the plurality of competing predictive models, wherein the processing of the raw data further comprises:
cleaning the raw data to remove extraneous data;
correlating the raw data;
indexing the raw data; and
storing the processed data in a key-value data store for query processing.

4. The system of any one of claims 1-3, wherein the instructions are further operative to:
train the plurality of competing ML models with the flight data, the weather data and real-time feedback associated with aircraft arrivals and departures, wherein one or more hyperparameters associated with at least one candidate ML model is tuned specifically for airport capacity prediction during training.

5. The system of any one of claims 1-4, wherein the instructions are further operative to:
deploy a set of microservices (320) on a cloud server (315), wherein the set of microservices build, train and test the plurality of competing ML models to generate the plurality of competing sets of prediction results using real-time feedback and training data.

6. The system of any one of claims 1-5, further comprising:
a plurality of data sources (112) providing the flight data and the weather data, wherein the instructions are further operative to:
analyze data associated with a selected runway (420) by the selected ML model; and
provide per-runway utilization data (208,210) for the runway, wherein the per-runway utilization data comprises congestion information for the selected runway, including predicted aircraft arrival and departure counts for the selected runway at a selected airport within a selected future time-period.

7. The system of any one of claims 1-6, wherein the instructions are further operative to:
provide real-time flight data (108) and real-time weather data (110) received from a plurality of data sources to the selected ML model;
obtain predicted airport capacity for a runway generated by the selected ML model based on real-time flight data and weather data received from the plurality of data sources; and
output the predicted airport capacity generated by the selected ML model to at least one user interface device, wherein the predicted airport capacity comprising predicted future aircraft arrival counts and predicted future aircraft departure counts for the runway during a set of pre-configured time-periods, wherein the predicted future aircraft arrival counts.

8. The system of claim 7, wherein the instructions are further operative to:
adjusting at least one candidate ML model in the plurality of competing ML models based on the real-time flight data and the real-time weather data.

9. A method for predicting airport utilization, the method comprising:
utilizing a plurality of competing machine learning (ML) models (102) configured to analyze flight data (108) and weather data (110) with actual arrival and departure data associated with a runway (202) to generate competing sets of prediction results, a set of prediction results (410) from the competing sets of prediction results (408) comprising a set of predicted arrivals (412) and a set of predicted departures (414) for the runway during a selected time-period (416) generated by a candidate ML model (504) in the plurality of competing ML models (102);
comparing the competing sets of prediction results (408) generated by the plurality of competing ML models (102) with actual arrival and departure data (424 and 426) for the runway (202) during the selected time-period;
selecting a candidate ML model from the plurality of competing ML models generating highest accuracy predictions (326); and
outputting predicted future arrivals and future departures data (412 and 414) for the runway generated by the selected ML model based on real-time flight data (108) and weather data (110) received from a plurality of data sources (112).

10. The method of claim 9, further comprising:
extracting a set of salient historical data (330) from historical flight-related data using PCA to eliminate bias and variance, wherein the set of salient historical data comprises data associated with at least one of airport features, environmental features, spatial features and temporal features associated with the runway..

11. The method of claim 10, further comprising:
storing the set of salient historical data in an interim data store for utilization by the plurality of competing ML models.

12. The method of any one of claims 9-11, further comprising:
displaying predicted future aircraft arrival counts and predicted future aircraft departure counts for the runway during a set of pre-configured time-periods to a user interface device, wherein the predicted future aircraft arrival counts and the predicted future aircraft departure counts are generated by the selected ML model.

13. The method of any one of claims 9-12, further comprising:
processing raw data by the plurality of competing ML models, wherein the processing of the raw data further comprises:
cleaning the raw data to remove extraneous data;
correlating the raw data;
indexing the raw data; and
storing the processed data in a key-value data store for query processing; .

14. The method of any one of claims 9-13, further comprising:
deploying a set of microservices (320) on a cloud server (315), wherein the set of microservices build, train and test the plurality of competing ML models to generate the competing sets of prediction results using real-time feedback and training data.

15. The method of any one of claims 9-14, wherein the plurality of ML models comprises at least one of a linear ML model, a non-linear ML model, an ensemble ML model, lasso ML model, elastic net regression, classification and regression trees, support vector regression, k-nearest neighbors, adaptive boosting, gradient boosting, random forest regression, extra trees regression, and recurrent neural networks.
